Europäisches Patentamt

European Patent Office

Office européen des brevets

(11) Veröffentlichungsnummer: **0 375 873**
**A2**

## (12) EUROPÄISCHE PATENTANMELDUNG

(21) Anmeldenummer: **89119685.9**

(22) Anmeldetag: **24.10.89**

(51) Int. Cl.⁵: **F16J 3/04, F16J 15/52**

(30) Priorität: **27.12.88 DE 3844009**

(43) Veröffentlichungstag der Anmeldung:
**04.07.90 Patentblatt 90/27**

(84) Benannte Vertragsstaaten:
**DE ES FR GB IT**

(71) Anmelder: **Continental AG**
**Königsworther Platz 1 Postfach 1 69**
**D-3000 Hannover 1(DE)**

(72) Erfinder: **Schmittmann, Heinrich, Dipl.-Ing.**
**Danzigerstrasse 3b**
**D-3138 Dannenberg/Elbe(DE)**
Erfinder: **Ganswindt, Helmut, Dipl.-Ing.**
**Ordasstrasse 11**
**D-3138 Dannenberg/Elbe(DE)**

(54) **Innenbefestigung von Faltenbälgen.**

(57) Befestigung (10) eines Faltenbalges (11), beispielsweise zur Abdichtung eines aus einem Maschinengehäuse (18) geführten Gestänges. Der Faltenbalg (11) ist mit einem Halteflansch (15) gehalten
und abgedichtet. Der Halteflansch (15) ist auf einem
radial innenliegenden Stützring (12) gehalten, der auf
seinem Außenumfang (32) Stützringnuten (13, 14)
aufweist. Der Halteflansch (15) ist mit einem nach
radial innen weisenden Haltewulst (16) und mit einem radial nach außen weisenden Dichtkegel (17)
versehen. Das Gehäuse (18) weist in seiner Gehäuseöffnung (34) eine radial nach außen weisende innere Nut (24) auf und der Haltewulst (16) ist mit
einer Stützringnut (14) und der Dichtkegel (17) ist
mit der inneren Nut (24) in Wirkverbindung bringbar.

FIG.1

EP 0 375 873 A2

# Innenbefestigung von Faltenbälgen

Die Erfindung betrifft eine Befestigung eines Faltenbalges, beispielsweise zur Abdichtung eines aus einem Maschinengehäuse geführten Gestänges, der mit einem Halteflansch gehalten und abzudichten ist.

Faltenbälge werden in der Regel aus einem Elastomer gefertigt und dienen als elastische, dehnbare Abdichtung zwischen zwei gegeneinander beweglichen, starren Maschineteilen, beispielsweise einem Lenkgestänge, das aus einem Lenkgehäuse herausragt und an diesem beweglich sein muß. Um Verschmutzungen des Inneren des Lenkgehäuses zu vermeiden, müssen die Faltenbälge sowohl an dem Lenkgehäuse als auch an dem Lenkgestänge dichtend befestigt sein.

Aus der DE-C2-29 02 455 ist dazu eine Faltenbalg-Befestigung bekannt, bei der der Faltenbalg an einem Gehäuse mittels einer mit einem Gegenflansch versehenen Befestigungsplatte stirnseitig gehalten und von außen eingeklemmt wird. Eine derartige stirnseitige Klemmhalterung erfordert jedoch einen großen Aufwand, der nicht an allen Gehäuseöffnungen vorgenommen werden kann.

Aufgabe der vorliegenden Erfindung ist es, eine Faltenbalg-Befestigung der eingangs beschriebenen Art zu schaffen, die leicht montierbar ist, einen zuverlässigen Sitz gewährleistet und innen in einer Gehäuseöffnung in Sitzposition abdichtend gehalten werden kann.

Gelöst wird diese Aufgabe in einer ersten Ausführungsform der Erfindung dadurch, daß der Halteflansch des Faltenbalges auf einem radial innenliegenden Stützring gehalten ist, der Stützring auf seinem Außenumfang Stützringnuten aufweist, der Halteflansch mit einem nach radial innen weisenden Haltewulst und mit einem radial nach außen weisenden Dichtkegel versehen ist, das Gehäuse in seiner Gehäuseöffnung mit einer radial nach außen weisenden inneren Nut versehen ist und der Haltewulst mit einer Stützringnut und der Dichtkegel mit der inneren Nut in Wirkverbindung bringbar sind.

In einer zweiten Ausführungsform der Erfindung ist der Halteflansch des Faltenbalges auf einem radial innenliegenden Stützring gehalten, wobei der Stützring mit einem axial außenliegenden Montageflansch und der Halteflansch des Faltenbalges mit einem axial außenliegenden Montagewulst versehen sind und der Montagewulst des Halteflansches mit dem Montageflansch des Stützringes in Wirkverbindung bringbar ist. Der Halteflansch weist einen radial nach außen weisenden Dichtkegel und das Gehäuse in seiner Gehäuseöffnung eine radial nach außen weisende innere Nut auf, mit der der Dichtkegel in Wirkverbindung bringbar ist.

In beiden Ausführungsformen der vorliegenden Erfindung kann ein Faltenbalg von innen an einer Öffnung einer beliebig ausgedehnten Platte ohne von außen auf dem Halteflansch anzubringende Haltemittel befestigt werden. Es wird eine Faltenbalgbefestigung geschaffen, bei der der Halteflansch des Faltenbalges zur Montage in eine Gehäuseöffnung eingeschoben wird und keine zusätzlichen, von außen wirkenden Befestigungselemente wie Schellen, Gegenflansche usw. benötigt werden. Bei der Montage dienen der nach radial innen weisende Haltewulst mit der mit ihm zusammenwirkenden Stützringnut und/oder der axial außenliegende Montagewulst im Zusammenwirken mit dem ihm zugeordneten Montageflansch zur axialen Fixierung des Halteflansches auf dem Stützring, so daß der Halteflansch des Faltenbalges durch axiale Verschiebung des Stützringes in seine Sollposition bringbar ist. Der Faltenbalg wird dabei gleichzeitig durch den Dichtkegel in der Gehäuseöffnung innen abgedichtet und im Zusammenwirken mit dem nicht aggregatfesten Stützring in seiner Lage fixiert. Weitere Befestigungsmittel sind nicht erforderlich. Auch ist eine Materialstressung nach Montage nicht mehr gegeben, so daß die Lebensdauer des Halteflansches erheblich verlängert wird. Zugleich werden also ein fester Sitz und eine einfache Montage gewährleistet und die äußeren Gehäuseabmessungen können variabel gestaltet sein.

Vorteilhafte Weiterbildungen beider Ausführungsformen sind in den Unteransprüchen beschrieben. Die Erfindung ist in der beiliegenden Zeichnung dargestellt und wird nachfolgend näher beschrieben; es zeigt:

Fig. 1 eine Faltenbalg-Befestigung gemäß der ersten Ausführungsform der Erfindung mit an dem Halteflansch einstückig angeformtem Haltewulst und Dichtkegel in Montageposition auf einem radial innenliegenden Stützring und einem radial außenliegenden Gehäuse;

Fig. 2 die Detaildarstellung des Halteflansches eines Faltenbalges zur Montage auf einem Stützring nach der Fig. 1;

Fig. 3 die Detaildarstellung eines Stützringes zur Aufnahme des Halteflansches eines Faltenbalges nach Fig. 1;

Fig. 4 die Detaildarstellung der Vormontage des Halteflansches eines Faltenbalges auf einem Stützring nach der Fig. 1;

Fig. 5 die Detaildarstellung der Montage eines Halteflansches mit in die axial innenliegende Stützringnut eingefaltetem Dichtkegel eines Faltenbalges nach der Fig. 1;

Fig. 6 eine Faltenbalg-Befestigung gemäß der zweiten Ausführungsform der Erfindung mit einem Montageflansch aufweisenden Stützring und einen Montagewulst aufweisenden Halteflansch.

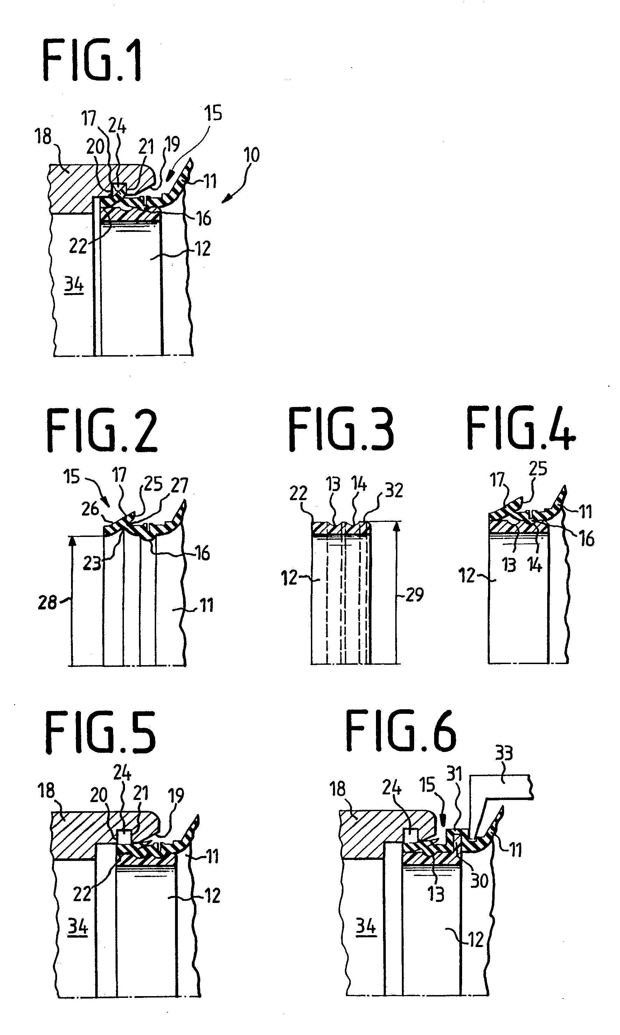

Die in der Fig. 1 dargestellte Faltenbalg-Befestigung 10 besteht im wesentlichen aus einem Stützring 12, über den der Halteflansch 15 eines Faltenbalges 11 gezogen und der in die Gehäuseöffnung 34 eines Gehäuses 18 axial eingeschoben werden kann. Der Stützring 12 besteht aus einem harten Kunststoff und weist einen geringfügig größeren Außendurchmesser 29 auf, als es dem Innendurchmesser 28 des Halteflansches 15 entspricht.

Wie die Fig. 2 zeigt, ist der Faltenbalg 11 mit einem Halteflansch 15 versehen, der zur Montage axial innen an dem Gehäuse 18 vorgesehen ist. Der Halteflansch 15 weist einen rundum laufenden, nach radial innen weisenden Haltewulst 16 und axial innen von dem Haltewulst 16 aus einen nach radial außen weisenden Dichtkegel 17 auf.

Wie die Fig. 3 zeigt, ist der Stützring 12 auf seinem Außenumfang 32 mit einer axial innenliegenden, rundum laufenden ersten Stützringnut 13 und mit einer axial außenliegenden, rundum laufenden zweiten Stützringnut 14 versehen.

Wie in der Fig. 4 dargestellt ist, wird der Halteflansch 15 etwas aufgeweitet, so daß er unter Eigenspannung auf dem Stützring 12 aufsitzt. Der Haltewulst 16 gelangt dabei zur Einlage in der zweiten Stützringnut 14. Der Dichtkegel 17 weist eine im wesentlichen radial verlaufende, nach axial außen weisende rundum laufende Dichtkante 25 auf, die von radial außen nach axial/radial innen in eine Kegelschräge 26 übergeht. Am Übergang zwischen der Dichtkante 25 in den axial verlaufenden Halteflansch 15 ist eine Sollknickstelle 27 vorgesehen. Axial innen verläuft in einem vorbestimmten Abstand eine zweite Sollknickstelle 23 radial innen in dem Dichtkegel 17.

Wie die Fig. 5 zeigt, weist die Gehäuseöffnung 34 des Gehäuses 18 radial innen, axial außen eine Einführungsschräge 19 auf, mit der bei der Montage der Dichtkegel 17 in der Sollknickstelle 27 eingeknickt werden kann. Der derart eingeknickte Dichtkegel 17 kann dann in der Sollknickstelle 23 nach radial innen in die erste Stützringnut 13 ausweichen, und der Stürzring 12 kann mit dem aufgezogenen Faltenbalg 11 in das Gehäuse 18 eingeführt werden.

Das Gehäuse 18 weist eine innere Nut 24 auf, in die nach Erreichen der Montageendstellung der Dichtkegel 17 wieder nach radial außen ausweichen kann. Die Dichtkante 25 des Dichtkegels 17 kommt dabei mit Vorspannung zur Anlage an der Vorderkante 21 der inneren Nut 24. Bei Zugbeanspruchung stützt sich der Dichtkegel 17 mit seiner Kegelschräge 26 an der Hinterkante 20 der inneren Nut 24 ab. Der Halteflansch 15 wird dabei zwischen dem axial innenliegenden Abstützpunkt 22 auf dem Stützring 12 und der Hinterkante 20 der inneren Nut 24 des Gehäuses 18 gehalten.

Ein derart ausgestalteter Faltenbalg 11 kann mit seinem Faltenbalgflansch 15 radial außen auf den Stützring 12 aufgezogen werden. Die aus Faltenbalg 11 und Stützring 12 bestehende Baueinheit kann dann in die Gehäuseöffnung 34 des Gehäuses 18 oder einer anderen, beliebig ausgedehnten Wandung oder Platte eingeschoben werden. Eine zusätzliche Sicherung oder Befestigung, beispielsweise eine, außen um den Halteflansch gelegte Schelle oder dgl. ist nicht erforderlich. Im Gegensatz zu einer solchen äußeren Befestigung wird der Halteflansch 15 innen befestigt und in der Gehäuseöffnung 34 dichtend gehalten.

Bei der in der Fig. 6 dargestellten zweiten Ausführungsvariante der vorliegenden Erfindung ist der Stützring 12 axial außen mit einem rundum laufenden Montageflansch 30 versehen. Der Halteflansch 15 des Faltenbalges 11 weist an seinem axial äußeren Ende einen rundum laufenden Montagewulst 31 auf, der mit dem Montageflansch 30 des Stützringes 12 in Wirkverbindung bringbar ist. Eine derart ausgestaltete Faltenbalg-Befestigung 10 ist mit Hilfe eines schematisch dargestellten Werkzeugs 33 automatisch montierbar.

## Ansprüche

1. Befestigung eines Faltenbalges (11), beispielsweise zur Abdichtung eines aus einem Maschinengehäuse geführten Gestänges, der mit einem Halteflansch (15) gehalten und abzudichten ist, **dadurch gekennzeichnet,** daß der Halteflansch (15) des Faltenbalges (11) auf einem radial innenliegenden Stützring (12) gehalten ist, der Stützring (12) auf seinem Außenumfang (32) mindestens eine Stützringnute (13, 14) aufweist, der Halteflansch (15) mit einem nach radial innen weisenden Haltewulst (16) und mit einem radial nach außen weisenden Dichtkegel (17) versehen ist, das Gehäuse (18) in seiner Gehäuseöffnung (34) mit einer radial nach außen weisenden inneren Nut (24) versehen ist und der Haltewulst (16) mit einer Stützringnut (14) und der Dichtkegel (17) mit der inneren Nut (24) in Wirkverbindung bringbar sind.

2. Befestigung eines Faltenbalges (11), beispielsweise zur Abdichtung eines aus einem Maschinengehäuse geführten Gestänges, der mit einem Halteflansch (15) gehalten und abzudichten ist, dadurch gekennzeichnet, daß der Halteflansch (15) des Faltenbalges (11) auf einem radial innenliegenden Stützring (12) gehalten ist, der Stützring (12) mit einem axial außenliegenden Montageflansch (30) und der Halteflansch (15) des Faltenbalges (11) mit einem axial außenliegenden Montagewulst (31) versehen sind und der Montagewulst (31) des Halteflansches (15) mit dem Montageflansch (30) des Stützringes (12) in Wirkverbindung bringbar ist und daß der Halteflansch (15) einen radial nach außen weisenden Dichtkegel (17) und das Gehäuse (18) in seiner Gehäuseöffnung (34) eine radial nach außen weisende innere Nut (24) aufweist und der Dichtkegel (17) mit der inneren Nut (24) in Wirkverbindung bringbar ist.

3. Befestigung eines Faltenbalges nach mindestens einem der Ansprüche 1 und 2, dadurch gekennzeichnet, daß der Dichtkegel (17) eine nach axial außen weisende, im wesentlichen radial verlaufende Dichtkante (25) aufweist, die mit der Vorderkante (21) der inneren Nut (24) in Wirkverbindung bringbar ist.

4. Befestigung eines Faltenbalges nach mindestens einem der Ansprüche 1 bis 3, dadurch gekennzeichnet, daß das Gehäuse (18) axial außen mit einer nach radial außen verlaufenden Einführungsschräge (19) versehen ist.

5. Befestigung eines Faltenbalges nach mindestens einem der Ansprüche 1 bis 4, dadurch gekennzeichnet, daß der Dichtkegel (17) des Halteflansches (15) mit einer radial-axial nach außen verlaufenden Kegelschräge (26) versehen ist und die Kegelschräge (26) mit der Hinterkante (20) der inneren Nut (24) des Gehäuses (18) in Wirkverbindung bringbar ist.

6. Befestigung eines Faltenbalges nach mindestens einem der Ansprüche 1 bis 5, dadurch gekennzeichnet, daß der Halteflansch (15) des Faltenbalges (11) im Bereich der Dichtkante (25) des Dichtkegels (17) mit einer radial außenliegenden äußeren Sollknickstelle (27) und im Bereich der Kegelschräge (26) mit einer radial innenliegenden inneren Sollknickstelle (23) versehen ist.

7. Befestigung eines Faltenbalges nach mindestens einem der Ansprüche 1 bis 6, dadurch gekennzeichnet, daß der Dichtkegel (17) im Bereich seiner Sollknickstellen (23, 27) radial nach innen in eine axial innenliegende Stützringnut (13) einfaltbar ist.

8. Befestigung eines Faltenbalges nach mindestens einem der Ansprüche 1 bis 7, dadurch gekennzeichnet, daß der Innendurchmesser (28) des Halteflansches (15) kleiner als der Außendurchmesser (29) des Stützringes (12) ist.

# FIG.1

# FIG.2

# FIG.3

# FIG.4

# FIG.5

# FIG.6

Continental AG, Hannov